# FASCICULE DE BREVET EUROPEEN

(11) **EP 2 493 294 B1**
(45) Date de publication et mention de la délivrance du brevet: **19.03.2014**
(21) Numéro de dépôt: 10765513.6
(22) Date de dépôt: 21.09.2010
(51) Int. Cl.: A01N 25/26, A01N 33/12, A01P 1/00, D06M 16/00, C12G 1/02, C02F 1/00

(54) **PROCEDE D'OBTENTION DE POUDRES INSOLUBLES DANS L'EAU PRESENTANT UNE ACTIVITE ANTI-MICROBIENNE, LES POUDRES AINSI OBTENUES ET LEUR APPLICATION ANTIBACTERIENNE**
VERFAHREN ZUR GEWINNUNG VON NICHT WASSERLÖSLICHEN PULVERN MIT ANTIMIKROBIELLER WIRKUNG, AUF DIESE WEISE GEWONNENE PULLVER UND IHRE ANTIBAKTERIELLE VERWENDUNG
METHOD FOR OBTAINING NON-WATER-SOLUBLE POWDERS HAVING ANTIMICROBIAL ACTIVITY, THE POWDERS THUS OBTAINED AND THE ANTIBACTERIAL USE THEREOF

(30) Priorité: 27.10.2009 FR 0905162
(43) Date de publication de la demande: 05.09.2012
(73) Titulaire: Poly-Bio, 75016 Paris (FR)
(72) Inventeur: de la BRUNIERE, Patrick, 75016 Paris (FR)
(74) Mandataire: Hirsch & Associés
(86) Numéro de dépôt international: PCT/IB2010/054261
(87) Numéro de publication internationale: WO 2011/051832

(56) Documents cités:
- WO-A1-2008/122698
- JP-A- 2003 160 412
- DATABASE CAPLUS, [Online] 4 avril 1995 (1995-04-04), OKANO TAKAYOSHI: "Solidification of disinfective didecyldimethylammonium chloride", XP002517921, extrait de CAPLUS cité dans la demande & JP 7 089907 A (OSAKA SEIYAKU KK) 4 avril 1995 (1995-04-04)

## Description

L'invention a pour objet un procédé d'obtention de poudres insolubles dans l'eau et présentant une activité anti-microbienne sur lesquelles adhèrent des sels d'ammonium quaternaires. Elle se rapporte également aux poudres ainsi obtenues et à leur utilisation en tant qu'agents antibactériens.

Les sels d'ammonium quaternaires sont connus pour posséder un pouvoir destructeur vis-à-vis de nombreuses bactéries ou virus. Ainsi, la demande de brevet japonais non examinée publiée sous le numéro 7-089907 au nom de Osaka Pharmaceutical Co. Ltd. indique que le chlorure de didécyl diméthyl ammonium est un agent antimicrobien exerçant une action désinfectante, une forte action bactéricide avec un large spectre antibiotique.

De ce fait, lesdites molécules sont largement utilisées dans des formulations destinées à l'hygiène dans l'habitat, en milieu hospitalier ou autre.

Classiquement les sels d'ammonium quaternaires, qui sont solubles dans l'eau, sont utilisés dans les applications antimicrobiennes sous forme liquide. Ces solutions pour être efficaces doivent être utilisées à une certains concentration et comme les sels d'ammonium quaternaires sont pas fixées sur des supports solides, après utilisation, elles se retrouvent dans la phase aqueuse traitée ou sont éliminées et peuvent de ce fait créer une pollution durable.

La préparation d'agents antimicrobiens comprenant du chlorure de didécyl diméthyl ammonium solidifié est difficile compte tenu des propriétés de ce produit. Aussi a-t-on cherché à fixer les sels d'ammonium quaternaire sur des supports pour pouvoir les récupérer plus aisément après utilisation.

La demande de brevet japonais précité a pour objet un produit pulvérulent ou pâteux comprenant un taux élevé de chlorure de didécyl diméthyl ammonium, obtenu par mélange du chlorure de didécyl diméthyl ammonium et d'un phosphate de métal alcalin, séché à 100-130°C. Ce brevet décrit un procédé de solidification dans lequel la totalité du mélange contenant le chlorure de didécyl diméthyl ammonium est solidifié. Il décrit également un procédé de production d'une formulation solide contenant au moins 40 % de chlorure de didécyl diméthyl ammonium.

La demande de brevet japonais publiée sous le numéro 2003-160412 au nom de Asahi Denka Kogyo KK décrit une poudre biodégradable antibactérienne obtenue par l'imprégnation d'une poudre consistant de préférence en gel de silice, zéolite ou charbon actif avec un sel d'ammonium quaternaire comprenant au moins un groupe ester et comprenant notamment 3 autres radicaux alkyle en C₁ à C₄. Le sel d'ammonium quaternaire pris en considération dans cette demande de brevet est un ester, l'atome d'azote quaternaire comportant un substituant ester de formule [(C₂₋₄ alkylène)-O]₁₋₅-COalkyle ou [(C₂₋₄ alkylène)-O]₁₋₅-CO-alkényle. Cette demande concerne l'obtention de formes à libération prolongée, résistantes à la chaleur et comprenant un agent antimicrobien autre qu'un sel de tetraalkyl ammonium et notamment autre que le chlorure de didécyl diméthyl ammonium.

Le brevet FR 2891545 au nom de La Brunière décrit des poudres de polyamide sur lesquelles, par l'intermédiaire d'un diisocyanate, on fixe chimiquement des ammonium quaternaires en utilisant les groupes -NH- des chaînes polyamidiques. Le champ d'application de ce brevet est limité aux polyamides et aux molécules d'ammonium quaternaire possédant un groupe fonctionnel -OH ou -NH₂ par exemple, susceptible de réagir avec un isocyanate.

Le brevet EP 0952168A de Toray Industries décrit un procédé d'obtention d'un copolymère greffé formé par polymérisation avec greffage d'unités structurelles contenant des groupes ammonium quaternaires et la présence d'un substituant consistant en ions halogènes, sulfates, hydroxydes de sodium et acides carboxyliques. Cette technique nécessite la mise en oeuvre d'un monomère comportant un atome d'halogène et se trouve limitée plus généralement au greffage sur des polymères thermoplastiques.

WO2008/122698 A1 concerne la préparation d'une poudre de polyamide biocide constitué par des particules poreuses portant un biocide sur leur surface et caractérisées par ce que le biocide ne migre pas vers le milieu à désinfecter. Cet effet est atteint par le greffage de groupements ammonium quaternaire sur le polymère qui constitue les particules.

Le problème que se propose de résoudre l'invention est de disposer d'un matériau pulvérulent insoluble contenant une poudre aisément disponible dans le commerce, lequel matériau attire par des voies physiques les bactéries en les fixant d'une part et d'autre part présente des propriétés antibactériennes conduisant à la destruction des bactéries. L'invention se propose également de résoudre les problèmes que rencontrent les porteurs de masques comprenant des filtres dont les matériaux antibactériens, qui entrent dans leur composition, sont entraînés vers les voies respiratoires du porteur de masque et provoquent des gènes respiratoires.

Aucun des matériaux connus ne permet de réaliser cet objectif, à savoir d'obtenir une telle poudre par un tel procédé, ni d'ailleurs ne permet d'obtenir les résultats surprenants et inattendus que la poudre selon l'invention permet d'obtenir.

L'invention a pour objet un procédé de préparation de poudres insolubles dans l'eau, présentant une activité antibactérienne, sur la surface desquelles adhèrent des sels d'ammoniums quaternaires, ce procédé comprenant les étapes suivantes :
- imprégnation ou mouillage d'une poudre de base présentant une granulométrie comprise entre 5µ et 500µ avec une solution d'un sel d'ammonium quaternaire soluble dont les substituants sont des dérivés alkyle en C₁ -C₁₅,
- traitement de la poudre ainsi imprégnée par une solution saline d'un acide dont la molécule est un dérivé de phosphate dont le poids moléculaire est supérieur à 100
- séchage de la poudre.

Selon un mode de réalisation du procédé de l'invention, le poids de sel d'ammonium quaternaire sous la forme de chlorure par rapport à la poudre de base utilisée est de 0,2 à 5 % du poids de ladite poudre.

Selon un autre mode de réalisation du procédé de l'invention, la poudre de base est une poudre inorganique.

Selon encore un mode de réalisation du procédé de l'invention, la poudre inorganique consiste en l'un des produits de la liste suivante: silice, silicates naturels ou synthétiques, carbonates insolubles naturels ou synthétiques, phosphates tricalciques.

Selon encore un autre mode de réalisation du procédé de l'invention, la poudre inorganique consiste en terres d'infusoires telles que Kieselghur ou Célite.

Selon un autre mode de réalisation du procédé de l'invention, la poudre de base consiste en polymères thermoplastiques ou thermodurcissables. Ces polymères peuvent être obtenus sous forme de poudres soit par broyage, soit par polymérisation.

Selon encore un autre mode de réalisation du procédé de l'invention, les polymères thermoplastiques ou thermodurcissables consistent en produits appartenant à la liste comprenant les polyamides, polyoléfines, polystyrènes, polyacrylates.

Selon un autre mode encore de réalisation du procédé de l'invention, l'ammonium quaternaire utilisé est un sel de didécyl diméthyl ammonium.

Selon une forme d'exécution du procédé de l'invention, la solution saline utilisée est un polyphosphate, un tripolyphosphate ou un pyrophosphate.

Des variantes de ce procédé peuvent être utilisées comme le montrent les exemples qui suivent, en particulier imprégnation et réaction peuvent avoir lieu simultanément. Un traitement complémentaire consiste à éliminer par lavage le sel, en général du chlorure ou du bromure de sodium formé au cours de la réaction.

La présente invention a également pour objet les poudres résultant de la mise en oeuvre de ce procédé.

Selon une forme de réalisation de ces poudres, celles-ci consistent en des poudres à la surface desquelles adhérent des molécules de pyrophosphate, de polyphosphates ou de tripolyphosphates de didécyl diméthyl ammonium et qui présentent une granulométrie comprise entre 5 µ et 500 µ.

Selon une autre forme de réalisation de ces poudres, celles-ci sont formées de poudres de base formées de matériaux inorganiques ou de polymères thermoplastiques ou thermodurcissables.

Ces poudres de base peuvent être constituées de matériaux inorganiques, tels que, par exemple, silice, silicates naturels ou synthétiques, terres d'infusoire telles que Kieselghur ou Célite, carbonates insolubles naturels ou synthétiques, phosphates tricalciques, de préférence Kieselghur, sans que cette liste ne soit limitative.

Elles peuvent également être constituées de polymères tels que: polyamides, polyoléfines, polyacrylates, polycarbonates, polystyrènes, thermoplastiques ou thermodurcissables, de préférence polyamides, sans que cette liste ne soit limitative.

La présente invention a également pour objet l'utilisation de poudres selon l'invention dans des applications antibactériennes nécessitant une action désinfectante, une forte action bactéricide et un large spectre antibiotique.

La présente invention a en outre pour objet des matériaux textiles sur lesquels sont fixés par toute technique convenable, par exemple par calandrage à chaud, les poudres selon l'invention.

Ces matériaux textiles peuvent servir à de nombreuses applications dans le domaine hospitalier: masques respiratoires, champs opératoires, blouses. Dans la vie quotidienne, masques et vêtements de protection, sous-vêtements peuvent être formés de ces matériaux textiles traités. Ces tissus ou non-tissés imprégnés desdites poudres peuvent servir à la fabrication de filtres destinés à la purification de l'air ou de milieux aqueux.

Il est particulièrement avantageux d'utiliser les matériaux textiles ainsi obtenus pour la fabrication de textiles hospitaliers, notamment de masques hospitaliers. En effet, l'emploi de masques qui, dans le matériau dont ils sont formés, comportent des sels d'ammonium quaternaire non fixés, provoque du fait de la vapeur d'eau contenue dans les flux respiratoires l'entraînement des sels d'ammonium quaternaire et donc des difficultés respiratoires au porteur du masque qui inhalerait ces sels.

Pour obtenir des tissus ou intissés antibactériens, il ne serait pas efficace d'imprégner lesdits tissus ou intissés avec une solution d'un sel d'ammonium quaternaire du commerce, tel que le chlorure de didécyl diméthyl ammonium, et de les sécher. En effet, la propriété anti-bactérienne disparaîtrait par entraînement au premier lavage et, dans le cas de masques respiratoires, l'humidité ambiante ou celle de la respiration dissolverait le sel d'ammonium quaternaire, qui pourrait alors être entraîné sous forme d'aérosol, et risquerait d'être inhalé.

De plus le fait que le sel d'ammonium quaternaire adhère à la poudre et du fait du caractère non soluble de ladite poudre, les poudres retiennent à leur surface les sels d'ammonium quaternaires et ces sels d'ammonium quaternaires ne peuvent donc pas se retrouver dans l'environnement.

Ces poudres peuvent également servir à filtrer les milieux aqueux pour diminuer ou détruire les populations microbiennes.

Le poids de sel d'ammonium quaternaire sous la forme de chlorure par rapport à la poudre de base utilisée est, de préférence, de 0,2 à 5 % du poids de ladite poudre, et, à cette teneur, la poudre finale obtenue, objet de l'invention, conserve la même granulométrie et la même insolubilité que la poudre initiale. En fait les sels d'ammonium quaternaire résultant de la réaction entre le chlorure d'ammonium quaternaire et le dérivé de phosphate consistent en sels de pyrophosphate, polyphosphates ou tripolyphosphates de didécyl diméthyl ammonium.

Les poudres utilisées selon l'invention sont de granulométrie, de préférence de 5 à 500 microns.

On a constaté que ce procédé conduit à l'obtention, sur la surface de la poudre employée, d'un film adhérent insoluble dans l'eau. Ce film, compte tenu de la faible quantité de sel d'ammonium quaternaire mise en jeu, de préférence de 0,5 à 5 % en poids de poudre, ne change ni l'aspect ni les caractéristiques physiques de ladite poudre, granulométrie, porosité et surface spécifique en particulier.

Le mode d'action des poudres suivant l'invention combine le pouvoir de rétention de bactéries des poudres de base utilisées pour leur fabrication avec le pouvoir bactéricide du sel d'ammonium quaternaire insoluble, tel que polyphosphate tripolyphosphate ou pyrophosphate d'ammonium quaternaire, qui adhère à la surface de la poudre selon l'invention.

En fait les poudres de base utilisées, en particulier les poudres de polyamides type BIONYL^{®} de POLY-BIO ont, sans traitement particulier, un pouvoir de rétention de bactéries pouvant atteindre 10⁹ UFC par gramme de poudre. Ce phénomène s'explique par la structure des grains de ce type de poudre, qui possèdent de multiples pores de dimension moyenne égale à 1 micron, propices à la captation de bactéries. En conséquence, ces poudres de granulométrie 5 à 50 microns, ont une densité apparente faible, de 0,3 à 0,45 g/ml, et une surface spécifique de 5 m² à 15 m²/g environ.

Les bactéries fixées sur les poudres de base restent vivantes. Lorsque, sur ce type de poudre de base, on fixe en surface un pyrophosphate, tripolyphosphate ou polyphosphate d'ammonium quaternaire, par exemple, même à dose très faible, la poudre obtenue, suivant l'invention, conserve son pouvoir d'attraction de bactéries, mais celles-ci sont alors détruites au contact de la surface de la poudre.

Ce mode d'action est totalement différent de celui des sels d'ammonium quaternaire solubles utilisés en solution aqueuse, car, dans ce cas, la destruction des bactéries résulte principalement du mouvement Brownien.

Il est parfaitement surprenant et inattendu d'obtenir comme le permet l'invention, que l'emploi de si faibles quantités de sels d'ammonium quaternaires puisse conduire aux résultats et avantages auquel conduit la présente invention.

De plus, pour ce qui concerne les matériaux textiles, du fait que ladite poudre est insoluble dans l'eau, son activité antibactérienne se maintient au cours de filtrations et dispersions successives en phases aqueuses polluées. Il est donc possible d'utiliser ce type de poudres pour la décontamination de l'eau par filtration sans laisser de traces de sel d'ammonium quaternaire dans l'eau traitée et en n'utilisant que des quantités d'ammonium quaternaire sans commune mesure avec celles qu'il aurait fallu utiliser si cette même eau avait été traitée directement par ce même sel d'ammonium quaternaire en solution. Ce résultat surprenant et inattendu confirme le côté novateur des poudres suivant l'invention. En outre comme cela est montré ci-dessous, les matériaux textiles ainsi traités conservent leurs propriétés antibactériennes après un certain nombre de lavages ce qui permet un emploi de longue durée des articles formés de ces matériaux textiles.

Une caractéristique essentielle de l'invention est l'activité antibactérienne exceptionnelle des poudres obtenues.
En effet, pour expliciter ce phénomène, on mesure, dans le même inoculum dont on a déterminé la concentration bactérienne en UFC/ml, l'activité anti-bactérienne.

D'une part, pour une poudre suivant l'invention dispersée dans cet inoculum a une dose fixée de x grammes pour 100 ml dudit inoculum par exemple, ces x grammes contiennent une quantité d'ammonium quaternaire fixée au moment de la fabrication de ladite poudre de y grammes (y étant de l'ordre de 0,2 % à 5 % de x).

Des tests ont démontré que la dispersion de la poudre suivant l'invention est au minimum deux fois plus active que dans le cas de l'emploi l'ammonium quaternaire en solution.

D'autres buts et avantages de la présente invention apparaîtront à la lecture des exemples suivants donnés à titre non limitatifs.

### EXEMPLE N° 1

Matières premières :

| | |
|---|---|
| ARQUAD^{®} 210-50 | 250 ml |
| BIONYL^{®} 650 | 10 kg |
| Tripolyphosphate de sodium | 64 g |
| Eau | 27 Litres |

ARQUAD^{®} 210-50 est le chlorure de didécyl diméthyl ammonium fabriqué par AKZO NOBEL.

BIONYL^{®} 650 est une poudre de polyamide 6 de granulométrie 50 µ de provenance Poly-bio. Par gramme de poudre, la surface spécifique est de 5 m².

### Mode opératoire :

- dans un réacteur agité, on disperse à température ordinaire les 10 kg de BIONYL^{®} 650 dans 27 litres d'eau,
- on ajoute progressivement les 250 ml d'ARQUAD^{®} 210-50 en agitant 10 min environ pour homogénéiser,
- on ajoute sans cesser d'agiter une solution de 64 g de polyphosphate de sodium dans 3 litres d'eau,
- chauffer à 80°C et agiter 30 min environ,
- éliminer l'eau restante, éventuellement sous vide, et porter à 100°C jusqu'à obtention d'une poudre sèche fluide.

Le contrôle de la poudre obtenue montre que la granulométrie et la surface spécifique du polyamide sont restées identiques.

### Test d'activité de la poudre obtenue :

7,2 g de cette poudre sèche contenant 1,1 % de didécyldiméthylammonium sont introduits dans 100 ml d'un inoculum contenant 10⁹ UFC d'*Escherichia coli* par ml et dispersés par agitation.

Les résultats suivants ont été obtenus :
Après

| | |
|---|---|
| 5 min d'agitation | 10⁶ UFC/ml |
| 10 min " " | 10² UFC/ml |
| 20 min " " | 0 UFC/ml |

### EXEMPLE N° 2

Matières premières :

| | |
|---|---|
| ARQUAD^{®} 210-50 | 25 ml |
| BIONYL^{®} 615 | 1 kg |
| Tripolyphosphate de sodium | 6,4 g |
| Eau | 2,7 litres |

BIONYL^{®} 615 est une poudre de polyamide 6 à forte porosité de granulométrie 15 microns présentant une surface spécifique de 12 m²/g fabriquée par la Société POLY-BIO.

Le mode opératoire est identique à celui de l'exemple n° 1.

La poudre obtenue fait l'objet d'un test d'activité bactéricide suivant la norme UNE-EN 1040 sur la bactérie *Staphylococcus aureus*.

A la concentration de 0,05 % de poudre dans l'inoculum testé, la réduction bactérienne est supérieure à 5 Log.

Compte tenu de la teneur en ammonium quaternaire de cette poudre, ceci correspond à 6 ppm environ d'ARQUAD^{®} 210-50.

Pour obtenir le même résultat, AKZO NOBEL (Guide line formulation on ARQUAD 2.10-50) recommande pour ce chlorure d'ammonium quaternaire en solution aqueuse une concentration de 12 à 16 ppm.

### EXEMPLE N° 3

Non tissé imprégné de poudre :
Matières premières :
   BIONYL^{®} 650 traité suivant l'exemple n° 1
   Non tissé de 30 g/m² environ composé de fibres de polypropylène à 70 % et de fibres de polyéthylène à 30 %.

On utilise la technique de poudrage puis de fixation de la poudre sur le intissé mise au point par la Société FIBROLINE suivant laquelle la poudre est fixée par fusion superficielle de la fibre à une température très inférieure à la température de fusion du polyamide par calandrage à une température de 120°C.

Deux grammages de poudre ont été produits, à savoir :
de 20 g/m² de poudre
de 40 g/m² de poudre

Les non tissés imprégnés obtenus sont testés suivant la norme JIS L 1902 utilisée pour contrôler l'activité antibactérien de matériaux textiles.

Pour passer cette norme, le coefficient utilisé doit être supérieur à zéro.

Le coefficient obtenu pour le non tissé à 20 g/m² est de 0,023 et de 1,3 pour 40 g/m².

Les bactéries testées sont : *S. aureus, E. coli, Pseudomonas aeruginosa, Kiebsiella pneumoniae*.

Cela rend possible l'utilisation de ces non tissés en milieux hospitaliers. En effet la possibilité de soumettre les articles formés de ce type de matériaux à plusieurs lavages sans qu'il ne perdent leurs propriété antibactérienne et du point de vue économique particulièrement intéressante. De plus, le fait que les sels d'ammonium fixés sur ces matériaux textiles sont insolubles, rend les articles formés de ces matériaux textiles particulièrement avantageux pour, entre autre, la fabrication de masques, notamment de masques hospitaliers. L'insolubilité des poudres employées empêche leur solubilisation dans les flux respiratoires et d'occasionner des difficultés respiratoires aux personnes les portant.

### EXEMPLE N° 4

Matières premières :
BIONYL^{®} 650 + Eau + BARDAC^{®} 22 solution à 50 % + Polyphosphate de sodium.

Le BARDAC^{®} 22 de provenance LONZA est une molécule comportant un chlorure d'ammonium quaternaire Il consiste en chlorure de didécyl diméthyl ammonium quaternaire actif à 50 %. Ce produit est soluble dans l'eau.

Dans un ballon d'un litre, on introduit 100 g de BIONYL^{®} 650 et environ 200 ml d'eau.

On agite pour bien mouiller. On ajoute 2,5 g de BARDAC^{®} 22 sous agitation. Sans cesser d'agiter, on introduit dans le même ballon une solution formée de 0,64 g de polyphosphate de sodium dans 50 ml d'eau. Le ballon est mis sous rota vapeur évaporer la totalité de l'eau en 1 h environ.

La poudre finale obtenue est testée du point de sa capacité antibactéricide. Pour ce faire, on utilise un inoculum provenant d'eaux usées et comportant 10⁵ UFC/ml.

La poudre est d'abord lavée 5 fois par mélange à 10 % dans de l'eau distillée et soumise aux filtrations successives. La poudre lavée est introduite dans l'inoculum à 10 % en poids. Après deux minutes d'agitation, la disparition des bactéries est totale.

### EXEMPLE N° 5

Matières premières :
BIONYL^{®} 608, eau, BARDAC^{®} 22, Polyphosphate de sodium.
Le BIONYL® 608 est une poudre de polyamide 6 de granulométrie 8 microns de provenance POLY-BIO. Sa porosité élevée lui confère un pouvoir de rétention bactérienne important.

A titre d'exemple, mise en dispersion à 10 % en poids dans un inoculum d'E. coli à 10⁸ UFC/ml, cette poudre absorbe environ 10⁹ bactéries par gr de poudre.

La poudre obtenue est référencée BIONYL^{®} 608 F1P1.

40 g de poudre BIONYL^{®} 608 F1P1 a été lavée 5 fois avec chaque fois 400 ml d'eau pendant deux heures à température ambiante. Entre deux mouillages, la poudre a été chaque fois filtrée et séchée.

| **Temps de contact** | **Colonies présentes (germes/l)** | **Réduction en log** |
|---|---|---|
| Témoin inoculum | 10⁵ à 10⁶ germes/litre | |
| Non lavé | 0 | 6 |
| 1^{er} lavage | 0 | 6 |
| 2^{éme} lavage | 0 | 6 |
| 3^{ème} lavage | 0 | 6 |
| 4^{ème} lavage | 10 | 5 |
| 5^{ème} lavage | 10 | 5 |

On constate que après trois lavages l'activité de la poudre selon l'invention n'a pas varié et que même après 5 lavages la diminution de l'activité n'est que de 1 Log.

### EXEMPLE N° 6

Matières premières :
Silice de WR GRACE SP 537-11092, eau, BARDAC® 22, tripolyphosphate de sodium.
La silice utilisée est une poudre de granulométrie 100 à 200 microns.

Dans un ballon d'un litre, on introduit 100 g de silice, 200 ml d'eau et 2,5 g de BARDAC^{®} 22.

Par agitation, on obtient une sorte de pâte à laquelle on ajoute une solution de 0,64 g de tripolyphosphate de sodium dans 50 ml d'eau. On agite 10 min et met le contenu du ballon au rotovateur. Après séchage, il faut démotter pour obtenir à nouveau une poudre homogène.

La poudre finale obtenue est référencée BIOSIL F1P1.

En suivant le même mode opératoire mais en en utilisant le polyphosphate de sodium on obtient une poudre référencée BIOSIL F1P2.

Sur l'inoculum précédent et dans les mêmes conditions, la réduction bactérienne est totale en 10 min que ce soit avec le BIOSIL F1P1 ou avec le BIOSIL F1P2.

### EXEMPLE N° 7

### Contrôle de vinification

Le contrôle de vinification se fait sur un jus de vin de Champagne de Cramant obtenu par pressurage sur un filtre à plaques. Le jus est limpide et riche en sucres. Ce jus est normalement traité au sulfite de potassium pour sélectionner le milieu fermentaire.

Un échantillon de jus avant sulfitage et avant fermentation alcoolique est prélevé, référencé E1. Deux échantillons E2 et E3 sont prélevés à une heure d'intervalle en fin de fermentation alcoolique. L'échantillon E2 a été mis en contact avec 5 % de BIONYL 608 F1P1 et l'échantillon E3 avec 5 % de BIONYL 650 F1P1. Les échantillons sont agités pour permettre le maintien en suspension de la poudre. Le tableau suivant résume les résultats obtenus. Les chiffres indiqués sont en UFC/ml.

| **Référence** | **Bactéries** | **Levures** | **Moisissures** |
|---|---|---|---|
| E1 | 10³ | 10⁵ | 0 |
| E1 BIONYL 608 F1P1 | 0 | 10³ | 0 |
| E2 | 0 | 10⁵ | 0 |
| E2 BIONYL 608 F1P1 | 0 | 10³ | 0 |
| E3 | 10³ | 10⁵ | Important |
| E3 BIONYL 650 F1P1 | 10³ | 0 | 0 |

Les mesures ont été effectuées avec les cult dip de MERCK. Le BIONYL 608 F1P1 a montré son efficacité pour contrôler la population fermentaire avant fermentation alcoolique, ce qui est nécessaire pour tous les types de vin pour empêcher la fermentation malo lactique non souhaitée pour les vins blancs et les champagnes. Le BIONYL 608 F1P1 peut donc se substituer avantageusement au traitement bisulfitique classique.

### EXEMPLE N° 8

### Matières premières

CELITE 650, eau, BARDAC 22, tripolyphosphate de sodium.

La CELITE 650 est une terre d'infusoires de même nature que le KIESELGUHR, présentant une granulométrie de 100 microns environ.

Mode opératoire :
Dans un réacteur agité, on introduit 10 kg de poudre de CELITE 650 et 25 litres d'eau.

On agite pour bien mouiller la poudre et ajoute sans cesser d'agiter 1,05 kg de BARDAC 22.

Une fois l'homogénéisation obtenue, on ajoute dans la masse agitée une solution formée de 252 g de polyphosphate dans 61 d'eau.

Au cours de cette opération, la phase huileuse qui se forme, peu à peu, est absorbée par la poudre Celite. Lorsque le milieu est à nouveau homogène, on met sous rotavapeur pour éliminer l'eau en agitant.

La poudre obtenue est dénommée BIOSIL 650 F1P1.

Contrôle de l'activité du BIOSIL 650 F1P1 :
10 g de BIOSIL 650 F1P1 sont dispersés et agités dans 100 ml d'un inoculum dont la charge e bactéries est exprimée en UFC/ml.

On effectue ce même test sur le BIONYL 608 préparé dans l'exemple 5. Le rapport pondéral d'ammonium quaternaire est de 1 % dans le cas du BIONYL 608F1P1 et de 4 % dans le cas du IONYL 608F1P1, donc 4 fois supérieur.

Le tableau ci-dessous résume les résultats obtenus :

| **Référence** | **Bactéries en UFC/ml** | **Réduction bactérienne en Log** |
|---|---|---|
| Inoculum initial | 10⁵ à 10⁶ germes/litre | |
| BIOSIL 650 à 10 min | 0 | 6 |
| BIONYL 608 F1P1 à 2 min | 0 | 6 |

On constate que le BIONYL 608 F1P1 permet une destruction totale des germes en deux minutes alors que le BIOSYL 650 possédant une charge pondérale en ammonium quaternaire 4 fois plus élevée nécessite pour le même résultat 10 minutes de traitement. Ceci met en évidence la capacité importante de la poudre BIONYL 608 (ayant servi de base pour la fabrication de la poudre BIONYL 608 F1PA) pour l'absorption bactérienne.

## Revendications

1. Procédé de préparation de poudres insolubles dans l'eau, présentant une activité antibactérienne, sur la surface desquelles adhèrent des sels d'ammoniums quaternaires, ce procédé comprenant les étapes suivantes :
- imprégnation ou mouillage d'une poudre de base présentant une granulométrie comprise entre 5 µm et 500 µm avec une solution d'un sel d'ammonium quaternaire soluble dont les substituants sont des dérivés alkyl en C₁ -C₁₅,
- traitement de la poudre ainsi imprégnée par une solution saline d'un acide dont la molécule est un dérivé de phosphate et dont le poids moléculaire est supérieur à 100,
- séchage de la poudre.

2. Procédé selon la revendication 1, **caractérisé en ce que** le poids de sel d'ammonium quaternaire sous la forme de chlorure par rapport à la poudre de base utilisée est de 0,2 à 5 % du poids de ladite poudre.

3. Procédé selon la revendication 1 ou 2, **caractérisé en ce que** la poudre de base est une poudre inorganique.

4. Procédé selon une quelconque des revendications 1 à 3, **caractérisé en ce que** la poudre inorganique consiste en l'un des produits appartenant à la liste comprenant les: silice, silicates naturels ou synthétiques, carbonates insolubles naturels ou synthétiques, phosphates tricalciques, les terres d'infusoires.

5. Procédé selon la revendication 1 ou 2, **caractérisé en ce que** la poudre de base consiste en polymères thermoplastiques ou thermodurcissables.

6. Procédé selon une quelconque des revendications 1 à 5, **caractérisé en ce que** l'ammonium quaternaire utilisé est un sel de didécyl diméthyl ammonium.

7. Procédé selon une quelconque des revendications 1 à 6, **caractérisé en ce que** la solution saline utilisée est un polyphosphate, un tripolyphosphate ou un pyrophosphate.

8. Poudres insolubles résultant de la mise en oeuvre du procédé selon une quelconque des revendications 1 à 7.

9. Poudres selon la revendication 8, **caractérisées en ce qu'**elles sont formées de poudres de base inorganiques ou polymères à la surface desquelles adhérent des molécules de didécyl diméthyl phosphate et qui présentent une granulométrie comprise entre 5µm et 500µm.

10. Poudres selon la revendication 8 ou la revendication 9, **caractérisées en ce qu'**elles sont constituées de poudres inorganiques choisies dans le groupe comprenant les silice, silicates naturels ou synthétiques, terres d'infusoire, carbonates insolubles naturels ou synthétiques, phosphates tricalciques.

11. Poudres selon la revendication 8 ou la revendication 9, **caractérisées en ce que** les poudres de base utilisées sont constituées de polymères.

12. Utilisation non thérapeutique des poudres insolubles selon une quelconque des revendications 8 à 11, dans des applications antibactériennes nécessitant une action désinfectante, une forte action bactéricide et un large spectre antibiotique.

13. Utilisation des poudres insolubles selon la revendication 12, pour la décontamination bactérienne ou virale, de l'eau ou de milieux aqueux pollués ou pour empêcher la fermentation malo lactique lors de la vinification.

14. Matériaux textiles sur lesquels sont fixées les poudres insolubles obtenues selon un procédé de l'une quelconque des revendications 1 à 7 ou sur lesquels sont fixées les poudres insolubles de l'une quelconque des revendications 8 à 11.

15. Utilisation des matériaux textiles selon la revendication 14, pour l'obtention de produits destinés à des fins médicales ou chirurgicales.

## Patentansprüche

1. Verfahren zur Herstellung von wasserunlöslichen Pulvern, die eine antibakterielle Aktivität aufweisen, auf deren Oberfläche quaternäre Ammoniumsalze haften, wobei dieses Verfahren die folgenden Schritte umfasst:
- Imprägnieren oder Befeuchten eines Basispulver, das eine Granulometrie im Bereich zwischen 5 µm und 500 µm aufweist, mit einer Lösung eines löslichen quaternären Ammoniumsalzes, dessen Substituenten C₁-C₁₅-Alkylderivate sind,
- Behandeln des derart imprägnierten Pulvers mit einer Salzlösung einer Säure, deren Molekül ein Phosphatderivat ist und deren Molekulargewicht größer als 100 ist,
- Trocknen des Pulvers.

2. Verfahren nach Anspruch 1, **dadurch gekennzeichnet, dass** das Gewicht des quaternären Ammoniumsalzes in Form von Chlorid bezogen auf das verwendete Basispulver 0,2 bis 5 % des Gewichts des Pulvers beträgt.

3. Verfahren nach Anspruch 1 oder 2, **dadurch gekennzeichnet, dass** das Basispulver ein anorganisches Pulver ist.

4. Verfahren nach einem der Ansprüche 1 bis 3, **dadurch gekennzeichnet, dass** das anorganische Pulver aus einem der Produkte besteht, die zur Liste gehören, umfassend: Kieselerde, natürliche oder synthetische Silicate, natürliche oder synthetische unlösliche Carbonate, Tricalciumphosphate, Diatomeenerden.

5. Verfahren nach Anspruch 1 oder 2, **dadurch gekennzeichnet, dass** das Basispulver aus thermoplastischen oder wärmehärtbaren Polymeren besteht.

6. Verfahren nach einem der Ansprüche 1 bis 5, **dadurch gekennzeichnet, dass** das verwendete quaternäre Ammonium ein Didecyldimethylammoniumsalz ist.

7. Verfahren nach einem der Ansprüche 1 bis 6, **dadurch gekennzeichnet, dass** die verwendete Salzlösung ein Polyphosphat, ein Tripolyphosphat oder ein Pyrophosphat ist.

8. Unlösliche Pulver, die aus der Ausführung des Verfahrens nach einem der Ansprüche 1 bis 7 resultieren.

9. Pulver nach Anspruch 8, **dadurch gekennzeichnet, dass** sie aus anorganischen Basispulvern oder Polymeren gebildet werden, auf deren Oberfläche Didecyldimethylphosphatmoleküle haften und die eine Granulometrie im Bereich zwischen 5 µm und 500 µm aufweisen.

10. Pulver nach Anspruch 8 oder Anspruch 9, **dadurch gekennzeichnet, dass** sie aus anorganischen Pulvern bestehen, ausgewählt aus der Gruppe, umfassend Kieselerde, natürliche oder synthetische Silicate, Diatomeenerden, natürliche oder synthetische unlösliche Carbonate, Tricalciumphosphate.

11. Pulver nach Anspruch 8 oder Anspruch 9, **dadurch gekennzeichnet, dass** die verwendeten Basispulver aus Polymeren bestehen.

12. Nicht therapeutische Verwendung von unlöslichen Pulvern nach einem der Ansprüche 8 bis 11 in antibakteriellen Anwendungen, die eine desinfizierende Wirkung, eine stark bakterizide Wirkung und ein Breitbandantibiotikum erfordern.

13. Verwendung der unlöslichen Pulver nach Anspruch 12 zur bakteriellen oder viralen Dekontamination von Wasser oder verschmutzten wässrigen Medien oder um die malolaktische Gärung während der Weinbereitung zu verhindern.

14. Textilmaterialien auf denen die unlöslichen Pulver fixiert sind, die nach einem Verfahren aus einem der Ansprüche 1 bis 7 erhalten wurden, oder auf denen die unlöslichen Pulver aus einem der Ansprüche 8 bis 11 fixiert sind.

15. Verwendung der Textilmaterialien nach Anspruch 14 zum Erhalt von Produkten, die für medizinische oder chirurgische Zwecke bestimmt sind.

## Claims

1. Method for preparing non-water-soluble powders having antibacterial activity, to the surface of which quaternary ammonium salts adhere, this method comprising the following stages:
- impregnation or wetting of a base powder having a particle size comprised between 5 µm and 500 µm with a solution of a soluble quaternary ammonium salt the substituents of which are C₁ -C₁₅ alkyl derivatives,
- treatment of the powder thus impregnated with a saline solution of an acid the molecule of which is a phosphate derivative and the molecular weight of which is greater than 100,
- drying the powder.

2. Method according to claim 1, **characterized in that** the weight of quaternary ammonium salt in the form of chloride relative to the base powder used is 0.2 to 5% of the weight of said powder.

3. Method according to claim 1 or 2, **characterized in that** the base powder is an inorganic powder.

4. Method according to any one of claims 1 to 3, **characterized in that** the inorganic powder consists of one of the products belonging to the list comprising: silica, natural or synthetic silicates, natural or synthetic insoluble carbonates, tricalcium phosphates, infusorial earths.

5. Method according to claim 1 or 2, **characterized in that** the base powder consists of thermoplastic or thermosetting polymers.

6. Method according to any one of claims 1 to 5, **characterized in that** the quaternary ammonium used is a didecyl dimethyl ammonium salt.

7. Method according to any one of claims 1 to 6, **characterized in that** the saline solution used is a polyphosphate, a tripolyphosphate or a pyrophosphate.

8. Insoluble powders resulting from the implementation of the method according to any one of claims 1 to 7.

9. Powders according to claim 8, **characterized in that** they are formed by inorganic base powders or polymer powders to the surface of which molecules of didecyl dimethyl phosphate molecules adhere and which have a particle size comprised between 5 µm and 500 µm.

10. Powders according to claim 8 or claim 9, **characterized in that** they are constituted by inorganic powders selected from the group comprising silica, natural or synthetic silicates, infusorial earths, natural or synthetic insoluble carbonates, tricalcium phosphates.

11. Powders according to claim 8 or claim 9, **characterized in that** the base powders used are constituted by polymers.

12. Non-therapeutic use of the insoluble powders according to any one of claims 8 to 11, in antibacterial applications requiring a disinfectant action, a strong bactericidal action and a broad antibiotic spectrum.

13. Use of the insoluble powders according to claim 12, for bacterial or viral decontamination of polluted water or aqueous media or in order to prevent malolactic fermentation during wine-making.

14. Textile materials to which the insoluble powders obtained according to a method of any one of claims 1 to 7 are fixed or to which the insoluble powders of any one of claims 8 to 11 are fixed.

15. Use of the textile materials according to claim 14, for obtaining products intended for medical or surgical purposes.
